# EUROPEAN PATENT SPECIFICATION

(11) **EP 4 297 348 B1**
(45) Date of publication and mention of the grant of the patent: **05.08.2026**
(21) Application number: 22180845.4
(22) Date of filing: 23.06.2022
(51) Int. Cl.: H04L 12/40, H04L 12/413

(54) **PHY LEVEL COLLISION AVOIDANCE WITH LOWER LATENCY QOS**
KOLLISIONSVERMEIDUNG AUF PHY-EBENE MIT QOS MIT NIEDRIGERER LATENZZEIT
ÉVITEMENT DE COLLISION DE NIVEAU PHY AVEC UNE QOS DE LATENCE PLUS FAIBLE

(43) Date of publication of application: 27.12.2023
(73) Proprietor: NXP B.V., 5656 AG Eindhoven (NL)
(72) Inventor: PANNELL, Donald Robert, San Jose, CA 95134 (US); CHAN, Lu Lu, 5656 AE Eindhoven (NL); VERMEULEN, Hubertus Gerardus Hendrikus, 5656 AE Eindhoven (NL); EVERS, Rainer, 22549 Hamburg (DE)
(74) Representative: Schmütz, Christian Klaus Johannes

(56) References cited:
- US-A1- 2019 261 420
- US-A1- 2020 067 727

## Description

### FIELD

The present disclosure relates to physical layer (PHY) devices. In particular, the present disclosure relates to a method of operating a plurality of communications nodes each comprising a physical layer (PHY) device and coupled to a shared media, a communications node comprising a physical layer (PHY) device and coupled to a shared media, and a communications network comprising a shared media, herein the shared media may be a twisted-pair wire and a plurality of communications nodes coupled to the shared media. The present disclosure relates in particular to a method which compared to previous PLCA techniques lowers the worst-case latency for higher priority frames.

### BACKGROUND

Modern automobiles include various electronic control units (ECUs) that implement, for example, engine control, power train control, airbag systems, antilock brake systems, cruise control, electric power steering, audio systems, window control systems, door control systems, mirror adjustment systems, and battery and recharging systems for hybrid/electric cars. The ECUs communicate with each other in an automobile via in-vehicle network (IVN) technologies such as Ethernet.

Ethernet is a well-known technology and the Institute of Electrical and Electronic Engineers (IEEE) 802.3 Working Group is a collection of standards that define physical layer and data link layer media access control (MAC) for wired Ethernet. An emerging IEEE standard that may be particularly applicable to in-vehicle networks is IEEE 802.3cg, which is a protocol for 10 Mb/s single twisted-pair Ethernet that enables multiple nodes to connect to the same twisted-pair wire, also referred to as a "shared media." The IEEE 802.3cg physical layer (PHY) utilizes CSMA/CD (Carrier Sense Multiple Access, Collision Detection) for media access control.

The 10 Mb/sec single-pair PHY project in IEEE defined a multi-drop mode of operation where multiple end-nodes or bridges are connected to a single twisted-pair wire network segment. In Ethernet terms, this network would be called a half-duplex network segment. The project did not define a new Ethernet MAC so the IEEE 802.3 standard Clause 4 MAC is used in half-duplex mode (CSMA/CD). This however causes a problem with the target application of Automotive since the CSMA/CD MAC is not deterministic.

One solution to the problems caused by CSMA/CD in automotive applications is to add logic to the PHY to avoid collisions. This is called PHY Level Collision Avoidance (PLCA). PLCA is a protocol that can be applied in conjunction with IEEE 802.3cg to provide deterministic performance in in-vehicle networks. Although PLCA adds deterministic performance in an IEEE 802.3cg network, applications such as in-vehicle networks may present additional challenges.

The original proposed PLCA is fair in terms of equal framerate. Enhancements have been made to change this to equal data-rate fairness.

An enhancement to add support for quality of service (QoS) instead of framerate fairness (as QoS is inherently unfair for those frames that need better service) is described in US 2019/0261420 A1 filed on 26 December 2018. A second enhancement to expand the number of QoS levels is covered in US 2020/0067727 A1 filed on 16 August 2019.

The present disclosure provides an enhancement to PLCA which more closely mimics the well understood behaviour of a QoS Ethernet switch resulting in a lower latency for higher priority frames.

### SUMMARY

According to the invention there is provided a method comprising the steps of claim 1.

Advantageously, the method according to the above steps lowers the worst-case scenario for higher priority frames compared to previous methods by performing a second advertising phase directly after the first data phase. This closely mimics the behaviour of Ethernet switches for frames at a multitude of priority levels. Minimal bandwidth overhead is added by increasing advertising opportunities for the communications nodes to indicate that they have higher priority frames to transmit with the benefit of being able to transmit these higher priority frames more quickly compared to fewer advertising opportunities that occur only per full cycle of all transmit opportunities of each of the plurality of communications nodes. Using this method, applications can choose for lower latency at the cost of slightly lower available bandwidth when QoS is needed on the shared media.

In some embodiments, the method may further comprise determining state information, wherein state information indicates which of the plurality of communications nodes transmitted a previous frame to the shared media in a previous data phase. Determining state information further mimics the behaviour of an Ethernet switch.

In some embodiments, the state information can be determined by the Coordinator. One of the plurality of communications nodes may be responsible for determining the state information and sharing information, such as a winning node of the plurality of nodes, with the other communications nodes.

In other embodiments, each communications node may determine the state information. For example, at each of the plurality of communications nodes.

In some embodiments, the method may further comprise indicating the priority level of the next frame by transmitting the indication in a media access priority beacon.

In some embodiments, determining which frame of the received next frames to be the next transmitted frame comprises determining that a priority level of one of the received next frames is higher than the priority levels of the other received next frames.

In some embodiments, if one or more of the next frames indicate the higher priority level, determining which next frame to transmit may comprise determining which communications node transmitted the previous frame at that priority level; and determining which communications node is a next communications node in a predetermined sequence. The predetermined sequence may relate to Node number, for example in an ascending order (or a round robin approach).

In some embodiments, the method may further comprise a coordinator data beacon for synchronizing the plurality of communications nodes for the data phase.

In some embodiments, the method may further comprise transmit opportunities for a communications node that was not chosen to transmit the next frame to the shared media.

In some embodiments, the method may further comprise timeouts for idle nodes.

In some embodiments, the method may further comprise learning the priority level of the frames through an MII interface, a serial peripheral interface (SPI) or through information in a header of the second frame.

In some embodiments, the method may further comprise indicating the priority level of the next frame by transmitting an indication of priority in a media access priority beacon.

According to the invention there is provided a communications node coupled to a shared media as defined in claim 8.

In some embodiments, the media access priority manager may be configured to determine state information, wherein state information indicates which of the plurality of communications nodes transmitted a previous frame (e.g. at each priority level) to the shared media in a previous data phase.

In some embodiments, the state information may be determined by a Coordinator. Winning node information may be shared with the communications node by the Coordinator.

In other embodiments, the communications node may determine the state information.

In some embodiments, the media access manager can be configured to initiate transmission of the one next frame if the priority level of the one next frame is higher than the priority levels of the other next frames to be transmitted from the other communications nodes.

In some embodiments, if the next frame and one or more other next frames have the highest priority level, transmitting the next frame if the communications node is next in a predetermined sequence.

According to the invention there is provided a communications network as defined in claim 14.

In some embodiments, the media access manager may be configured to determine the one next frame by selecting the next frame with a highest priority level; or if two or more next frames have the highest priority level, select the one next frame from the communications node which is next in a predetermined sequence.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures.
**FIG. 1** depicts a communications network that includes multiple communications nodes that communicate through a shared media, such as twisted-pair wires.
**FIG. 2** illustrates Ethernet layers which are mapped to the layers of the OSI reference model.
**FIG. 3** depicts an expanded view of a communications network that includes three communications nodes that communicate over a shared media according to the IEEE 802.3cg protocol and that may implement PLCA.
**FIG. 4A** illustrates the relationship of a media access priority manager relative the OSI model shown in **FIG. 2****.**
**FIG. 4B** depicts an embodiment of a PHY device configured to operate in compliance with IEEE 802.3cg that includes a media access priority manager.
**FIG. 5A** illustrates a worst-case latency scenario for a high priority frame according to two PLCA methods with Priority Advertisement only (PLCA with QoS) or with an embodiment of this patent (PLCA with lower latency QoS).
**FIG. 5B** illustrates PLCA cycles including a regular PLCA cycle example, a PLCA with QoS, PLCA with lower latency QoS, and a PLCA with lower latency QoS variant.

### DETAILED DESCRIPTION

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the invention is, therefore, indicated by the appended claims rather than by this detailed description.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

The enhancements presented by the present disclosure compared to previous PLCA techniques lowers the worst-case latency for higher priority frames by adding minimal additional bandwidth overhead and local state information, to mimic the behaviour of Ethernet switches more closely. The enhancements may be described as Lower Latency QoS. Applications can choose lower latency over slightly lower bandwidth when QoS is needed on the PLCA reconciliation sublayer.

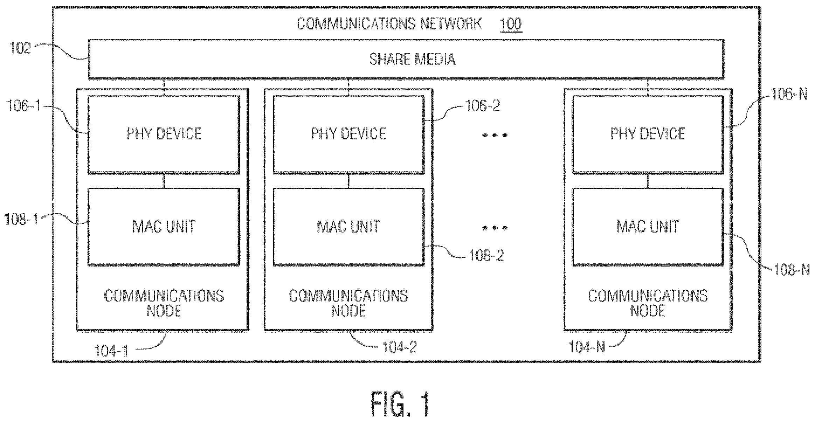

FIG. 1 depicts a communications network 100 that includes multiple communications nodes 104 - 1 , 104 - 2, ... , 104 -N (where N is an integer greater than one) that communicate through a shared media 102 , such as twisted-pair wires. In the embodiment of FIG. 1, each communications node includes a corresponding physical layer (PHY) device 106 - 1 , 106 - 2 ,..., or 106 -N (also referred to as a transceiver) and a corresponding media access control (MAC) unit 108 - 1 , 108 - 2 , ..., or 108 -N, the communications network configured to perform media access arbitration to orchestrate access to the shared media. The MAC unit supports collision detection (CSMA/CD) and the PLCA (with and without QoS) is in the reconciliation sublayer, which is typically part of the PHY device. In an embodiment, the communication nodes may be end nodes that include, for example, various electronic control units (ECUs) for engine control, power train control, airbags, antilock brakes, cruise control, electric power steering, audio systems, windows, doors, mirror adjustment, battery and recharging systems for hybrid/electric cars, and many more. The communications nodes may also be a node such as an Ethernet bridge. Although the illustrated communications nodes are shown with certain components and described with certain functionality herein, other embodiments of the communications nodes may include fewer or more components to implement the same, less, or more functionality.

In an embodiment, the communications network 100 is an Ethernet network that utilizes CSMA/CD for media access control and that is compatible with the emerging IEEE 802.3cg protocol, which currently specifies the physical layer for 10 Mb/s over a single twisted-pair cable. The PHY devices 106 - 1 , 106 - 2 ,... , 106 -N are configured to manage physical layer communications functions according to the IEEE 802.3cg specification. For example, the PHY devices transmit analog signals onto the shared media and receive analog signals from the shared media. The PHY devices may also protect other components in the node from extreme electrical conditions, e.g., electrical surges, which may occur on the shared media.

The MAC units 108 - 1, 108 - 2 ,..., 108 -N are configured to perform media access control for the corresponding communications nodes 104 - 1 , 104 - 2 ,... , 104 -N. The MAC units may be implemented within a processor, such as a microcontroller, a host processor, a host, a digital signal processor (DSP), or a central processing unit (CPU). In some embodiments, at least one of the MAC units is included within the PHY layer module of an IEEE 802.3cg compatible Ethernet communications device. Although the illustrated MAC units are shown in FIG. 1 as included in the corresponding communications nodes, in some embodiments, the MAC units may be separated from the corresponding communications nodes.

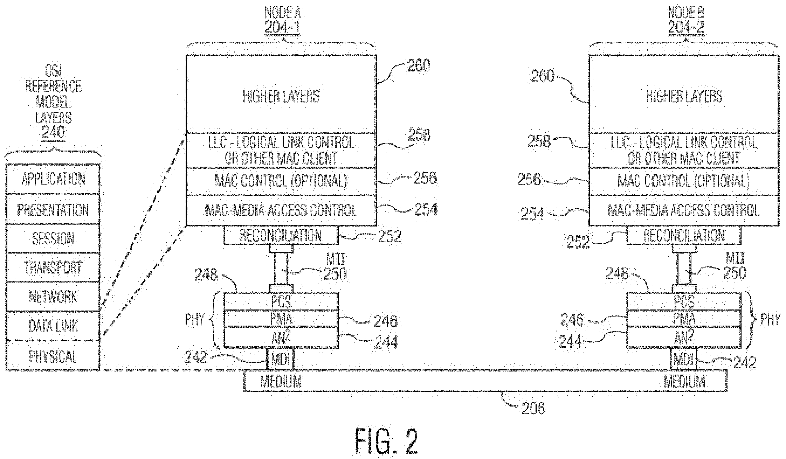

FIG. 2 illustrates an Ethernet communication network that includes two nodes, node A 204 - 1 and node B 204 - 2 , in an Ethernet based in-vehicle network that is, for example, compatible with IEEE 802.3cg. FIG. 2 also depicts the layers of the OSI reference model 240 as well as an expanded view of the physical layer and the data link layer. As shown in FIG. 2, the OSI reference model includes the physical layer (also referred to as layer 1 or L1), the data link layer (also referred to as layer 2 or L2), the network layer (also referred to as layer 3 or L3), the transport layer (also referred to as layer 4 or L4), the session layer (also referred to as layer 5 or L5), the presentation layer (also referred to as layer 6 or L6), and the application layer (also referred to as layer 7 or L7). Elements in the expanded view of the physical layer include media-dependent sublayers of the transmission medium 206 , a media-dependent interface (MDI) 242 , an auto-negotiation layer (AN2) 244 , a physical medium attachment (PMA) 246 , and the physical coding sublayer (PCS) 248, and media-independent sublayers of a media-independent interface (MII) 250 , and a reconciliation sublayer 252. The reconciliation sublayer 252 may comprise 10BASE-T1S PLCA. The 10BASE-T1S specification was developed as part of the IEEE 802.3cg standard, which was published in February 2020. 10BASE-T1S provides the missing link in the automotive Ethernet ecosystem, enabling true Ethernet-to-the-edge connectivity and addressing the needs of zonal architectures. In some embodiments, the auto-negotiation may not be used. The AN2 layer may be replaced with a physical medium dependent (PMD) layer in such cases. For example, the present disclosure may be used in 10BASE-T1S in multidrop mode. In OPEN Alliance, a PMD transceiver may be specified. In an embodiment, elements of the PCS, PMA, and AN2 are included in a physical layer chip, often referred to as a "PHY chip" and or simply as a "PHY" as indicated in FIG. 2. In some embodiments the PHY chip may also include the reconciliation layer. Elements in the expanded view of the data link layer include the media access control (MAC) layer 254, the MAC control layer (optional) 256 , and the logical link control (LLC) 258, or other MAC client layer. Higher layers 260 may be implemented above the data link layer.

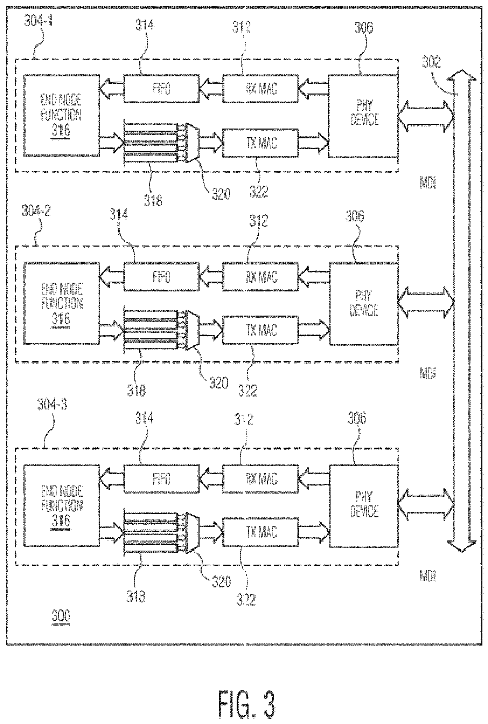

FIG. 3 depicts an expanded view of a communications network 300 that includes three communications nodes 304 - 1 , 304 - 2, and 304 - 3 that communicate over a shared media 302 according to the IEEE 802.3cg standard. As shown in FIG. 3, each communications node includes a PHY device 306, a receive component of a MAC unit (referred to as an RX MAC 312), a receive FIFO 314, an end node function 316, transmit Quality of Service (QoS) queues 318, a frame selector 320, and a transmit component of a MAC unit (referred to as a TX MAC 322). In some embodiments, the PHY devices 306 of the communications network implement PLCA on the IEEE 802.3cg 10BASE-T1S network in multidrop mode. PLCA is implemented at the physical layer and may be integrated with the reconciliation sublayer 252 (FIG. 2). An operational principle of PLCA, when PLCA is optionally chosen to be used, is that each PHY device is assigned an identifier (ID) that is unique across the shared media and the PHY devices can only transmit data during specific ordered slots that correspond to their respective ID.

In the embodiment of FIG. 3, each communications node 304 - 1 , 304 - 2 , and 304 - 3 supports the QoS queues 318 in the respective transmit path. In an embodiment, the four QoS queues are configured to queue frames that are to be transmitted from the corresponding communications node and each QoS queue corresponds to a different priority, e.g., high priority, medium priority, normal priority, and low priority, where the priorities are listed in descending priority order. The four QoS queues allow the differentiation of frame priority based upon the QoS queue in which a frame is placed. In a simple QoS use case, the frame selector 320 implements strict priority scheduling to select frames from the QoS queues. In an embodiment, strict priority scheduling dictates that the highest priority queue is always emptied first and only when the highest priority queue is empty will a next lower priority queue be serviced. The next priority queue is serviced until that queue is emptied or until a higher priority queue receives a frame. In deterministic systems, strict priority schedulers are generally used because of their simplicity. To prevent starvation of the lower priority queues, the output of each queue on each node can be rate limited to ensure that the respective queues do not transmit more data than they should.

Some frames need more bandwidth and a deterministic worst-case bounded latency to get across the network. Thus, frame priority and its associated mechanisms were defined. While each frame selector 320 can ensure a particular latency of frame delivery into its own TX MAC 322, a conventional PHY device that is compatible with IEEE 802.3cg (including PHY devices that implement Physical Layer Collision Avoidance, also referred to simply as "PLCA") cannot deliver such a differentiated service over the shared media. It may be desirable to be able to achieve a strict priority type of operation (other scheduling algorithms may be possible as well, but strict priority is particularly useful in in-vehicle networks) in an IEEE 802.3cg compliant communications network, including, for example, an IEEE 802.3cg compliant communications network that utilizes PLCA.

One approach to achieving strict priority in an IEEE 802.3cg compliant communications network involves fragmenting queued frames to prevent smaller higher priority frames from getting stuck behind larger (e.g., maximum sized) lower priority frames. Although this approach may work well to prevent smaller higher priority frames from getting stuck behind larger (e.g., maximum sized) lower priority frames, fragmenting queued frames may not provide the desired latency when, for example, on-the-wire priority is not considered. Additionally, fragmenting queued frames in each PHY device requires re-assembly buffers, e.g., one re-assembly buffer for each communications node on the shared media. Since the number of communications nodes on the shared media is only known when the PHY devices are put into use and not when the PHY devices are fabricated, it is impossible to know how many re-assembly buffers a PHY device would need. Also, the size of the buffers would have to be at least the size of two maximum size frames since a frame cannot be sent to a communications node until a previous transmission is complete and the transmissions could all complete at the same time. A second frame buffer may also be needed to receive the frames that may be received while transmitting the frames that were just received. Such an approach not only needs more memory, but it may also not solve the latency to the target communications node problem.

One approach allows each End Node 316 to advertise the media priority of the frame it wanted to transmit. Adding a PLCA Beacon "advertisement" phase ahead of its normal "data" phase allows all the End Nodes 316 to "see" the requesting priority of all the other nodes on the network segment. Then only those nodes requesting to transmit frames of the highest advertised priority can transmit during the normal PLCA "data" phase.

This approach is simple and allows higher priority frames to get their needed unfair bandwidth on the PLCA network. An added benefit of this mechanism is there is no need to hold state information between Beacons. However, improvements can be made to this approach to lower the worst-case latency for higher priority frames.

Another approach according to the present disclosure comprises operating a PHY device 306 for media access control to a shared media and involves identifying a priority of a frame that is to be transmitted onto the shared media 302 from the PHY layer device 306 and transmitting an indication of the priority of the frame onto the shared media 302 from the PHY device 306 after every transmission of a frame onto the shared media 302. The PHY device 306 is optionally compatible with the IEEE 802.3 standard and utilizes CSMA/CD. By transmitting an indication of the priority of a frame onto the shared media 302 from a PHY device 306, the one or more other PHY devices 306 on the shared media 302 are able to know the priorities of pending frames of the respective PHY devices 306 connected to the shared media 302 and can transmit frames in a priority order (e.g., based on PHY level frame priority arbitration) that ensures that the highest priority frames waiting for access to the shared media 302 are transmitted onto the shared media 302 before lower priority frames. Thus, physical layer quality of service can be implemented in an IEEE 802.3cg compliant communications network 300.

In an embodiment, operating a PHY device 306 in an IEEE 802.3cg compliant communications network 300 also involves receiving priorities of frames to be transmitted onto the shared media 302 from other PHY devices 306 that are connected to the shared media 302 and determining, at the PHY level, whether or not to transmit its frame onto the shared media 302 based on the priority of its frame relative to the priorities of the frames that are waiting to be transmitted from the other PHY devices 306.

The technique may further involve, at a particular PHY device 306, initiating transmission of its frame if the priority of its frame is higher than the priorities of all the other frames that are waiting to be transmitted from the other PHY devices 306 on the shared media 302. In an embodiment, the indication of priority may be transmitted from a PHY device 306 in a media access priority beacon.

In an embodiment, the PHY device 306 may learn the priority of its frame from the MAC unit 322 through an MII interface. By sharing frame priorities at the PHY layer, an IEEE 802.3cg compliant communications network can implement a strict priority scheme at the physical layer, thus providing low latency for the highest priority frames.

To reduce a worst-case scenario for a high priority frame, the mechanism can be further extended to improve coordination between all of the communications nodes 304 which are connected to the shared media 302. The coordination can be enhanced to mimic Ethernet switch mechanisms by re-evaluating the priority of the next frame that all of the End Nodes 316 want to transmit to the shared media 302 after each frame is transmitted over the network 300. Whilst this may increase the overhead due to additional advertising bandwidth required, overall latency for the highest priority frames can be reduced by not having to wait for a next "data" phase.

To further mimic an Ethernet switch and maintain fairness at each priority level between the End Nodes 316, state information is determined. State information concerns which End Node 316 transmitted the most recently transmitted frame and may, for example, further comprise information about the most recently transmitted frame at its priority level. The state information is handled in the PLCA. This results in "fairness" between the End Nodes. In some examples the state information may not be known by each of the End Nodes.

In an embodiment, the above-described technique is implemented at the physical layer (Layer 1) as specified in the OSI reference model (see OSI reference model layers 240 at FIG. 2).

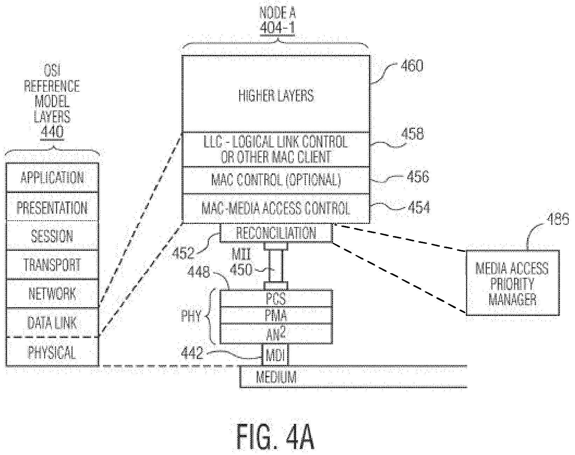

FIG. 4A depicts a media access priority manager 486 that is implemented at the physical layer (Layer 1) to achieve physical layer quality of service functionality. It will be appreciated that the media access priority manager does not have to be implemented in Layer 1 and that other configurations are also possible. For example, the media access priority manager implements functions to support the sharing of priority information at the physical layer and the priority arbitration, at the physical layer, amongst priorities received from other nodes on the communications network. The media access priority manager may also implement functions at the physical layer related to learning the priority of frames that are ready for transmission. As illustrated in FIG. 4A, the media access priority manager 486 operates in the reconciliation layer 452 between the PCS 448 of the physical layer and below the MAC layer 454 of the data link layer.

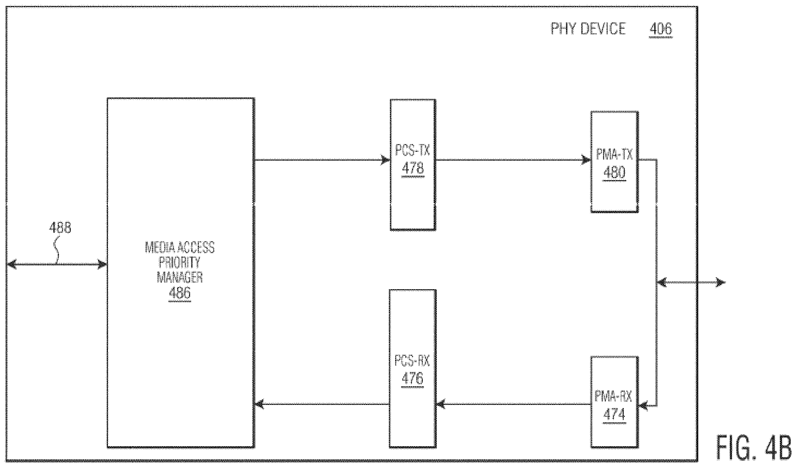

FIG. 4B depicts components of a PHY device 406 that is configured to operate in compliance with IEEE 802.3cg. As shown in FIG. 4B, the PHY device includes a physical medium attachment receiver (PMA-RX) 474 , a physical coding sublayer receiver (PCS-RX) 476 , a physical coding sublayer transmitter (PCS-TX) 478 , a physical medium attachment transmitter (PMA-TX) 480 , and a media access priority manager 486 . The media access priority manager 486 is part of the PLCA. In one embodiment, the PHY device is a standalone PHY chip that is connected to the shared media (e.g., twisted-pair wire) via the PMA-TX and PMA-RX and to another device in the communications node via an interface 488 such as an MII (e.g., reduced media-independent interface (RMII) referred to collectively as "xMII"). In other embodiments, the media access priority manager is connected to another device in the communications node by another interface, such as a serial peripheral interface (SPI).

In an embodiment, the media access priority manager 486 is configured to coordinate the transmission of priority identifiers onto the shared media and to arbitrate among the priorities of the pending frames of the different PHY devices on the shared media based on received priority identifiers. In an embodiment, each PHY device transmits an indication of the priority of the frame (e.g., a "priority advertisement") that the PHY device intends to transmit next onto the shared media. For example, during a current transmission cycle, each PHY device transmits an indication of the priority of the frame that the PHY device intends to transmit in a subsequent (e.g., next) transmission cycle, where a transmission cycle includes a transmission of one frame from each node on the shared media (or at least provides each node an opportunity to transmit one frame per transmission cycle). Each PHY device, in the PLCA station order (e.g., as indicated by the node ID), transmits an indication of the priority of the frame that the device intends to transmit next onto the shared media. In an embodiment, each PHY device transmits the priority of the frame that the corresponding PHY device intends to transmit in an order dictated by the PHY IDs and after the master PHY issues an "advertise beacon." For example, the priority information indicates one of four priorities, high, medium, normal, and low, although other priority conventions and number of different priorities can be used.

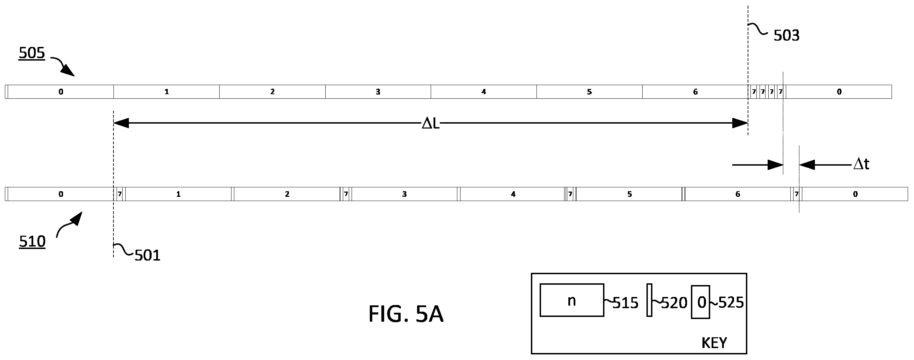

FIG. 5A illustrates a worst-case latency scenario for a high priority frame according to a previously described method 505 of US 2019/0261420 A1 vs the present disclosure 510.

In FIG. 5A, low priority long frames 515, PLCA Beacon priority advertisement 520, and high priority short frames 525 are illustrated for a first method 505 and a second method 510. The previously described first method 505 allows the PHY device to advertise priorities of its frames once during a transmission cycle wherein the transmission cycle comprises transmission of a frame from each node in the network. Some problems arise in particular for high priority frames when the protocol allows the PHY devices to advertise priorities of their frames only once during a transmission cycle. For example (see method 505 of FIG. 5A): Assuming Nodes 0 to 6 on an eight-node network all want to send a maximum sized low priority frame 515 at the time the PLCA Beacon priority advertisement 520 occurs. Node 7 is a node that transmits high priority short frames. Node 7 realizes it needs to transmit a minimum sized high priority frame 525 one clock cycle after it advertised it currently had no frame to transmit but has to wait until the next opportunity to advertise as illustrated by ΔL and reference sign 503. In this case all the maximum sized low priority frames 515 from End Nodes 0 to 6 will be transmitted ahead of Node 7's high priority frame 525 because each normal PLCA Beacon starts transmission from Node 0 to Node N-1. After this long latency period, if Node 7 has accumulated more high priority frames 525 (e.g. two or more as illustrated FIG. 5A), and it is the only node with that priority, Node 7 will be able to "catch-up" by transmitting all of its high priority frames starting at the next PLCA Beacon. Thus, whilst the appropriate unfair bandwidth is given to higher priority frames, latency of a first high priority frame 525 could have a long worst-case latency (N-1) * the size of a maximum sized Ethernet frame 515, where N is equal to the number of end nodes on the PLCA local network.

One way to decrease the latency for high priority frames 525 is to reduce the transmission cycle to a single frame. This could also be described as increasing the number of advertising phases such that high priority frames get more opportunities to transmit.

If the PLCA network is replaced with an Ethernet switch in the above example of a first method 505, the highest priority frames would start transmitting after only one maximum sized Ethernet frame instead of N-1. The present disclosure aims to achieve the same behaviour/performance with PLCA, where 510 shows the worst-case latency improvement vs. 505 for a previously disclosed network example (of US 2019/0261420 A1). The presently disclosed method 510 provides the opportunity for Node 7 to advertise its high priority frame after transmission from Node 0 (at time 501), which is earlier than waiting for the full transmission cycle from Node 0 to Node N-1 (at time 503) according to the previous method 505. The method of the present disclosure 510 is an enhancement of the previous method 505. It requires a small amount of additional advertising bandwidth (due to the extra PLCA Advertisement Beacon required after every frame transmitted by any End Node - this added overhead is shown in FIG. 5A as Δt) and may also require determining state information which indicates which of the nodes in the network was the last node to transmit a frame to the shared media at a particular priority level. Thus the previously described method 505 is still valid in those environments where unfair bandwidth is needed, but where the lowest possible latency is not. The presently described method 510 can further deliver lowest possibly latency for the highest priority frames.

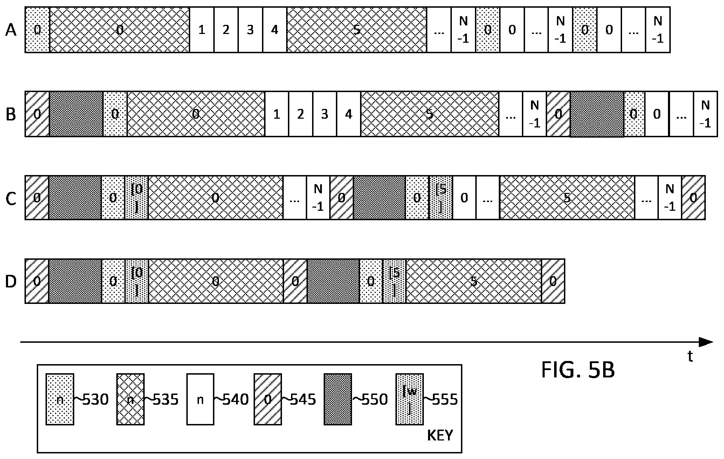

FIG. 5B illustrates PLCA cycles A, B, C and D. Where A is a regular PLCA cycle example, B is PLCA with QoS (US 2019/0261420 A1), C is PLCA with lower latency QoS as described herein where the Coordinator keeps track of a single winning node that wins the advertisement and announces it to all Nodes, and D illustrates a PLCA with lower latency QoS according to an embodiment of the present disclosure where the wining node is also advertised as in C with the variation that the empty transmit opportunities that do not belong to the winning node are not part of the data phase cycle.

PLCA cycle A comprises a first coordinator beacon 530 from Node 0 followed by transmission of data 535 from Node 0. Nodes 1 to 4 are silent 540 so do not make a transmission. Data is then transmitted 535 from Node 5. Note that in this example, the data 535 have the same and highest priority in this example. The remaining nodes up to Node N-1 are silent 540. The cycle then starts again with a coordinator beacon 530.

PLCA cycle B comprises the addition of a priority advertisement beacon 545 followed by a priority advertisement 550 prior to the coordinator beacon 530. The remainder of the cycle follows the cycle as illustrated in PLCA cycle A.

PLCA cycle C comprises the priority advertisement beacon 545 and priority advertisement 550 of PLCA cycle B, followed by a coordinator data beacon 530 (from Node 0) and further comprises winner information 555, which indicates that Node w won the advertisement.

PLCA cycle D shows an embodiment of PLCA cycle C that does not spend any time during the cycle on silent nodes 540.

A PLCA cycle method as illustrated by A in FIG. 5B is defined where each node transmits its next Ethernet frame in a round robin approach. The first PLCA cycle A illustrates the IEEE 802.3cg standardized PLCA method, and B illustrates the PLCA cycle as described in US 2019/0261420 A1. FIG. 5B illustrates an N node network, with node IDs ranging from 0 to N-1. The indicated priority advertisement phase occurs in conjunction with the PLCA Beacon operation. In this way, each node knows the priority of all frames that the other nodes want to transmit such that only the highest advertised priority frames (and the priorities above it, if they just appeared in an End Nodes queues) are allowed to be transmitted during that PLCA Beacon cycle.

If these end nodes were all connected with an Ethernet switch instead, the higher priority frames would be transmitted with at most one lower priority frame ahead of them (like in FIG. 5A - method 510). The present disclosure better mimics how Ethernet switches work, resulting in better PLCA compatibility to IEEE 802.1's Time Sensitive Networking standards.

To get the lower latency that Ethernet switches deliver (i.e., a worst-case latency of one maximum sized lower priority frame), the PLCA mechanism and its coordination with all the End Nodes, needs to be enhanced to mimic what Ethernet switches do.

The PLCA "network" can re-evaluate the priority of the next frame that all of the End Nodes want to transmit after every single frame is transmitted over the "network" (see FIG. 5B PLCA cycles C and D).

State information can be kept so that fairness at each priority level is maintained between the End Nodes.

The mechanism can be further enhanced to be robust against bit errors and the powering down and up of End Nodes.

### Re-evaluation of the Priority of all End Nodes Frames

As mentioned above and as visible in FIG. 5A method 510 and FIG. 5B PLCA cycles C and D, a mechanism used to attain lower latency is the addition of a PLCA Beacon "advertisement" phase after every transmitted frame (as opposed to after each node has a chance to transmit a frame). FIG. 5A shows the benefit of this mechanism, the magnitude of the reduced latency (ΔL) for the high priority frame 525, and it shows the cost to attain this in terms of additional overhead (Δt) used on the networks segment.

Having all the nodes "advertise" their next frame's priority, as seen in FIG. 5B PLCA cycles C and D, after every frame transmission from any node, mimics what each node's internal Tx path QoS Queues do (as shown in FIG. 3) and what Ethernet switches do as they use the same mechanism in their Tx path. The re-evaluation of the priority queues that have a frame ready for transmission, and the selection of the highest priority one to be transmitted next, after every frame transmission, results in the lowest latency for higher priority frames.

### Fairness at each Priority between the End Nodes

The addition of the mechanism described above in "Re-evaluation of the Priority of all End Node Frames" can be further extended to solve the problem of fairness at a given priority level between nodes which still needs to be maintained. Since in "Re-evaluation of the Priority of all End Node Frames" issues a PLCA Beacon after every transmitted frame, if Node 0 wants to send a burst of the highest priority frames, it gets all the transmit opportunities, even if some or all the other nodes also want to transmit a frame of the same priority.

This is not how Ethernet switches work. Switches place the frames of a given priority into the output port's Tx path QoS Queue assigned to that priority, in the order the frames were received. Therefore, if Ports 0, 1, 2 & 3 all received a high priority frame at the same time that is mapped to go out Port 4, all four of these frames will egress out Port 4 before any subsequently received frames. This is true even if Port 0 gets more higher priority frames.

One mechanism to maintain fairness between the PLCA End Nodes is to maintain state information about which End Node last transmitted a frame for each of the supported PLCA media priority levels (US 2020/0067727 A1 defined support for more than eight priority levels). With this information, the next time a given priority level is determined to be the highest, the winning Node that gets to transmit is the next higher Node number than the last Node number that transmitted a frame at that priority level. The next higher Node number is calculated with wrapping such that an eight-node network where Node 6 was the last to transmit, the search order for the next winning Node number would be 7, 0, 1, 2, 3, 4, 5 and 6. In some examples, this order may be a predetermined sequence. This shows that Node 6 can be the next winner if no other Nodes want to transmit a frame at the winning priority level. Maintaining state information can also be used to determine which Node gets to transmit the next frame to the shared media in the case that there are two or more Nodes having a given priority frame to transmit (where "given" is the highest priority for all advertised frames). For example, if the most recent Node to transmit a frame to the shared media is Node 3, the next Node in the sequence would be Node 4 (if Node 4 has a frame to transmit that is of the given priority). In another example, if Nodes 1 and 5 both have frames to transmit having a given priority, the Node that would be chosen to transmit the next frame would be Node 5 (in the example that Node 3 was the last Node to transmit a frame to the shared media at the given priority), because Node 5 comes first according to the predetermined sequence comprising a round-robin approach.

There are several ways to keep this state information, including:
1) Each End Node keeps track of the last Node number that transmitted at each supported media priority.
2) The Beacon generator node (typically Node 0) keeps track of this information.

Other variations include the omission of the coordinator data beacon, as the priority advertisement beacon could already be sufficient to synchronize all nodes.

Furthermore, the transmit opportunities of the nodes that lost the arbitration could be omitted as another embodiment of this disclosure, as there can only be a single winner and all other TOs will just time out. This would remove the time-out durations.

### Maintain State Information in each End Node

The PLCA Beacon "advertisement" phase (described in US 2019/0261420 A1) has each node, in Node number order starting from 0, advertise on the wire the priority of its next frame to transmit. During the PLCA "data" phase each station gets a transmit opportunity, starting from Node 0 to Node N-1, where nodes that are not transmitting can sit idle such that after a silent time-out period, the next higher numbered node gets its opportunity (in US 2019/0261420 A1, nodes that don't have a frame to transmit at the winning priority stay silent). In this way each node can know what Node number was the last one to transmit a frame at the winning priority and both pieces of information can be acquired by watching what occurs on the wire.

This requires that the PLCA "data" phase works as before, including timeouts for idle nodes, so that the transmitting Node number can be decerned. This could be more overhead idle time on the wire than in other embodiments, which gets larger as the number of nodes increases. But this approach requires fewer changes to the standard PLCA state machines.

### Maintain State Information in the Beacon Generator End Node Only

The PLCA Beacon "advertisement" phase (described in US 2019/0261420 A1) is also used here but in this case only the Beacon generator node processes the received information from all the other nodes. The Beacon node then determines a winning priority and the winning Node number by examining its local copy of the last winning Node number (for the winning priority). The Beacon generator then transmits a "winner" Beacon with the number of the Node that gets to transmit. The winning node transmits its frame and the Beacon generator updates its local copy of the last winning Node number and then starts a new Beacon "advertisement" phase.

This requires that the PLCA "data" phase is prefaced with a new "winner" Beacon, meaning this approach requires more changes to the standard PLCA state machines compared to the embodiment described above. However, this embodiment could provide less overhead idle time on the wire than the alternative option whereby each End Node maintains state information described above, as the winning node gets to start transmitting right away, as it knows it is the winner and the normal PLCA transmission opportunity timeouts can be skipped (see "Omitting silent Transmit Opportunities"). It has the added benefit of keeping the state information in one place (e.g. in the Beacon node that must always be alive for the network segment to work). This may be beneficial in avoiding synchronisation issues.

Since PLCA requires one and only one Beacon generator node, this is the preferred node to keep the state information, as this node cannot be powered down unless all the nodes on the PLCA network are also powered down. In automotive this is an acceptable restriction to get the benefits of PLCA and the enhancements described here. When the Beacon generator is the holder of the state information, it has the added job of indicating the winning node after each Advertisement beacon cycle. While this increases the size of the Advertisement beacon cycle, it saves time as the winning node can transmit immediately knowing it is the winner (i.e., the normal PLCA transmission opportunity timeouts can be skipped).

If there is corrupted data or if the Beacon generator node makes an incorrect decision as to the winning node, at most one frame gets transmitted earlier than it should. If the winning node doesn't have any frames to transmit it will timeout and the Beacon generator will do a new Advertisement beacon cycle.

If a powered down End Node powers up, when it is done booting and it is ready to transmit a frame, only then does this new End Node partake in Advertisement beacons. When it does, the Beacon generator will know this node has not been the winner and will tell it when it is.

The start-up procedure for the End Node has no historical state information but by definition, the End Node does not need any state information and the Beacon generator will tell it when it wins.

### Omitting the Data Beacon

The coordinator data beacon 530 could be omitted in further embodiments of this disclosure, to optimize the overhead the lower latency QoS variant of PLCA brings, in case the priority advertisement beacon 545 already is sufficient to synchronize all nodes. This is possible in case all nodes know how many nodes participate in the advertisement and can therefore determine when either the winner information 555 is sent or the data phase 535 begins. This embodiment could be linked to the embodiment when each End node maintains state information.

### Omitting silent Transmit Opportunities

The Transmit Opportunity (TO) of the nodes that lost the arbitration could be omitted as another embodiment, as there can only be a single winner and all other TOs will just time out. This would remove the time-out durations of the Transmit Opportunities of all nodes other than the winning node.

This embodiment is especially suitable for the variant where only the Coordinator node maintains state information and communicates the winner, as there would be no ambiguity for each End Node with regards to the winner and there is less chance of a bus conflict. However, it can also be combined with the variant where all End Nodes maintain the state information.

FIG. 5B PLCA cycle D illustrates an embodiment comprising the options as described above in relation to maintaining fairness at each Priority between End Nodes. It is the most optimal from a worst-case latency perspective for the highest priority frame on the bus, and the most robust.

### Overhead Efficiency and worst-case latencies

The present disclosure describes a mechanism and protocol to achieve PLCA Latency Improvements to QoS. The exact symbols/bits on the wire used to communicate this protocol are not defined here, as they may need to be different depending upon the environment, number of supported priorities, and/or the network size. That being said, the overhead can be closely estimated knowing the bits on the wire used for the normal PLCA Beacon.

Compared to regular PLCA, the present disclosure reduces the worst-case latency by approximately N multiplied by maximum frame length time, where N is the number of nodes in the network. This reduction is roughly in the order of 10k bit-times per node on the bus. This comes with the added cost of the advertisement phase, which is roughly in the order of tenths of bit-time per node on the bus. At 10Mbps, this means we get worst-case reductions in the order of milliseconds, at the cost of microseconds.

This is illustrated via an example network and comparing the worst-case situations for Regular PLCA (e.g. Cycle A of FIG. 5B), and the embodiments illustrated in FIG. 5B PLCA cycles B and D in Table 1 below. For the worst-case situations, all Transmit Opportunities in the cycles of Fig. 5B would have the largest possible Ethernet frame to transmit.

The worst-case situation is defined as when there is a frame F that becomes available at time T at node X with the highest priority among all frames available on all the nodes on the bus, but will need to wait a worst-case scenario before node X may actually transmit on the PLCA bus at time T'. The worst-case latency is then T' -T, and is different per PLCA variant discussed below.

For Regular PLCA with a single frame transmission per Transmit Opportunity, this is when the frame becomes available just after the Transmit Opportunity (TO) of node X, and all other N-1 nodes have the largest possible Ethernet frame to transmit. Frame F would then have to wait for N-1 TOs and the Coordinator Beacon.

For a worst-case scenario, the frame becomes available on the first node of the network, but has just missed its Transmit Opportunity, and all other N-1 nodes have the largest possible Ethernet frame to transmit. Frame F would have to wait for N-1 TOs, the Priority Advertisement Phase, and the Coordinator Beacon. This actually increases the worst-case latency compared to the Regular PLCA (cycle A) case with a single frame transmission per Transmit Opportunity.

For the present disclosure, in the embodiment FIG. 5B PLCA cycle D, the frame becomes available just after the Transmit Opportunity of node X. Frame F then waits for the Priority Advertisement Phase, and the Coordinator Beacon.

Taking an example network of 8 nodes, and assuming an advertisement phase of 85 bits (where 5 bits for the advertisement beacon, 10 bits for arbitration information), a coordinator beacon of 5 bits, and winner info to be 5 bits, we can see the improvements and costs more quantitatively in Table 1.

**Table 1: Worst-case latency and overhead costs**

| | **Worst-case latency for highest priority frame** | | **Advertisement phase latency** | | **Coordinator Beacon (data phase)** | |
|---|---|---|---|---|---|---|
| **Regular PLCA (no bursts)** | | 8,635,700 µs | | 0 | | 0.5 µs |
| **PLCA with QoS defined in PLCA cycle B** | | 8,644,200 µs | | 8.5 µs | | 0.5 µs |
| **Present disclosure PLCA cycle D** | | 1,251,100 µs | | 8.5 µs | | 1.0 µs |

**Table 2: Latency improvements**

| | **Latency improvements of the worst-case** | | **Advertisement phase cost increase** | | **Coordinator Beacon cost increase** | |
|---|---|---|---|---|---|---|
| **Delta of Present disclosure wrt regular PLCA** | | 7,384,600 µs | | 8.5 µs | | 0.5 µs |
| **Delta of Present disclosure wrt PLCA cycle B** | | 7,393,100 µs | | 0 | | 0.5 µs |

Table 2 shows an overview of the latency improvements of the worst-case scenarios comparing the PLCA cycle illustrated in FIG. 5B PLCA cycle D to regular PLCA (PLCA cycle A), and to FIG. 5B PLCA cycle B. It also shows the cost increase in terms of latency caused by the overhead of adding advertising beacons. As mentioned earlier, and as shown in Table 2, the latency improvement in the worst-case scenarios are in the order of milliseconds, whereas the cost of overhead is in the order of microseconds.

The overhead can also be expressed in reduction of available bandwidth. In the example network of Table 1, this is 90 bits per cycle (where 85 bits is the advertisement phase, and 5 bit is the winner information). Since a cycle in the embodiment of PLCA cycle D only contains one transmit opportunity (that of the winner node), at most one cycle is (95 bits + 1542*8 bits =) 12,431 bits. So the overhead contribution is (90/12,431)*100 = 0.724% of a cycle, and the available bandwidth of the bus reduces by 90 bits per cycle. If a minimum sized frame is sent in a cycle, that is (95 bits + 84*8 bits =) 767 bits. So the overhead contribution is (90/767)*100 = 11.734% of a cycle. The bandwidth reduction lies somewhere between 0.724% and 11.734% of the available bandwidth of the bus.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the appended claims.

## Claims

1. A method of operating a plurality of communications nodes (104-1, 104 - 2 , ... , 104 -N) coupled to a shared media (102), the method comprising:
performing a first advertising phase (520) comprising:
identifying, at each of the plurality of communications nodes, a priority level of a next frame for transmission to the shared media by that communications node;
transmitting, by each of the plurality of communications nodes, an indication of the priority level of the next frame of that communications node for transmission onto the shared media;
receiving, at a Coordinator (530) and/or each of the plurality communications nodes, the indications of priority levels of the next frames to be transmitted to the shared media from the plurality of communications nodes coupled to the shared media;
in preparation for a first data phase, determining one next frame of the plurality of next frames to be a next transmitted frame to the shared media based on the received indications of priority levels of the plurality of next frames;
performing the first data phase comprising:
transmitting the determined one next frame to the shared media; and
performing a second advertising phase directly after the first data phase.

2. The method of claim 1, further comprising determining state information, wherein state information indicates which of the plurality of communications nodes transmitted a previous frame to the shared media in a previous data phase.

3. The method of claim 2, wherein the state information is determined by the Coordinator.

4. The method of claim 2, wherein each communications node determines the state information.

5. The method of any preceding claim, further comprising indicating the priority level of the next frame by transmitting the indication in a media access priority beacon.

6. The method of any preceding claim, wherein determining which frame of the next frames to be the next transmitted frame comprises determining that a priority level of one of the next frames is higher than the priority levels of the other next frames.

7. The method of claim 6, wherein if one or more of the next frames indicate the highest priority level, determining which next frame to transmit comprises determining which communications node is next in a predetermined sequence.

8. A communications node (104) coupled to a shared media (102), the communications node comprising a media access priority manager (486) configured to:
in a first advertising phase:
identify a priority level of a next frame for transmission to the shared media by the communications node;
transmit an indication of the priority level of the next frame for transmission onto the shared media;
receive either information concerning whether the communications node is a winning node, from a Coordinator (530), or receiving indications of priority levels of other next frames for transmission onto the shared media from other communications nodes coupled to the shared media;
in preparation for a first data phase, determine whether the next frame of the communications node is a one next frame to be transmitted to the shared media based on the received winning node information or the received indications of priority levels of the plurality of next frames from the other communications nodes coupled to the shared media,
if the next frame is the one next frame:
in a first data phase, transmit the one next frame to the shared media; and
perform a second advertising phase directly after the first data phase.

9. The communications node of claim 8, further comprising determining state information, wherein state information indicates which of the plurality of communications nodes transmitted a previous frame to the shared media in a previous data phase.

10. The communications node of claim 9, wherein the state information is determined at the Coordinator.

11. The communications node of claim 9, wherein the communications node determines the state information.

12. The communications node of any of claims 8 to 11, wherein the media access priority manager is configured to initiate transmission of the one next frame if the priority level of the one next frame is higher than the priority levels of the other next frames to be transmitted from the other communications nodes.

13. The communications node of claim 12, wherein if the next frame and one or more other next frames have the highest priority level, transmitting the next frame if the communications node is next in a predetermined sequence.

14. A communications network (100) comprising:
a shared media (102), wherein the shared media is a twisted-pair wire;
a plurality of communications nodes (104 - 1 , 104 - 2 , ... , 104 -N) coupled to the shared media, each communications node comprising a media access priority manager (486) configured to:
in a first advertising phase:
identify a priority level of a next frame for transmission to the shared media by the communications node;
transmit an indication of the priority level of the next frame for transmission onto the shared media;
receive either information concerning whether the communications node is a winning node, from a Coordinator (530), or receiving indications of priority levels of other next frames for transmission onto the shared media from other communications nodes coupled to the shared media;
in preparation for a first data phase, determine a one next frame to be transmitted to the shared media based on the received winning node information or the received indications of priority levels of the plurality of next frames from the other communications nodes coupled to the shared media, if the next frame is the one next frame, in a first data phase, transmit the one next frame to the shared media; and
perform a second advertising phase directly after the first data phase.

15. The communications network of claim 14, wherein determining the one next frame comprises selecting the next frame with a highest priority level; or
if two or more next frames have the highest priority level, selecting the one next frame from the communications node which is next in a predetermined sequence.

## Patentansprüche

1. Verfahren zum Betreiben einer Vielzahl von Kommunikationsknoten (104 - 1, 104 - 2, ... , 104 -N), die mit einem gemeinsam genutzten Medium (102) gekoppelt sind, wobei das Verfahren Folgendes umfasst:
Durchführen einer ersten Werbephase (520), die Folgendes umfasst:
Identifizieren, an jedem der Vielzahl von Kommunikationsknoten, einer Prioritätsstufe eines nächsten Frames zur Übertragung an das gemeinsam genutzte Medium durch diesen Kommunikationsknoten;
Übertragen, durch jeden der Vielzahl von Kommunikationsknoten, einer Angabe der Prioritätsstufe des nächsten Frames dieses Kommunikationsknotens zur Übertragung auf das gemeinsam genutzte Medium;
Empfangen, an einem Koordinator (530) und/oder jedem der Vielzahl von Kommunikationsknoten, der Angaben von Prioritätsstufen der nächsten Frames, die zu dem gemeinsam genutzten Medium zu übertragen sind, von der Vielzahl von Kommunikationsknoten, die mit dem gemeinsam genutzten Medium gekoppelt sind;
in Vorbereitung auf eine erste Datenphase, Bestimmen, dass ein nächster Frame der Vielzahl von nächsten Frames ein nächster übertragener Frame zu dem gemeinsam genutzten Medium ist, basierend auf den empfangenen Angaben von Prioritätsstufen der Vielzahl von nächsten Frames;
Durchführen der ersten Datenphase, die Folgendes umfasst:
Übertragen des bestimmten einen nächsten Frames an das gemeinsam genutzte Medium; und
Durchführen einer zweiten Werbephase direkt nach der ersten Datenphase.

2. Verfahren nach Anspruch 1, das ferner das Bestimmen von Zustandsinformationen umfasst, wobei Zustandsinformationen angeben, welcher der Vielzahl von Kommunikationsknoten einen vorherigen Frame zu dem gemeinsam genutzten Medium in einer vorherigen Datenphase übertragen hat.

3. Verfahren nach Anspruch 2, wobei die Zustandsinformationen durch den Koordinator bestimmt werden.

4. Verfahren nach Anspruch 2, wobei jeder Kommunikationsknoten die Zustandsinformationen bestimmt.

5. Verfahren nach einem der vorhergehenden Ansprüche, das ferner das Angeben der Prioritätsstufe des nächsten Frames durch Übertragen der Angabe in einem Medienzugriffsprioritäts-Beacon umfasst.

6. Verfahren nach einem der vorhergehenden Ansprüche, wobei das Bestimmen, welcher Frame der nächsten Frames der nächste übertragene Frame sein soll, das Bestimmen umfasst, dass eine Prioritätsstufe eines der nächsten Frames höher als die Prioritätsstufen der anderen nächsten Frames ist.

7. Verfahren nach Anspruch 6, wobei, falls einer oder mehrere der nächsten Frames die höchste Prioritätsstufe angeben, das Bestimmen, welcher nächste Frame zu senden ist, das Bestimmen umfasst, welcher Kommunikationsknoten in einer vorbestimmten Sequenz der nächste ist.

8. Kommunikationsknoten (104), der mit einem gemeinsam genutzten Medium (102) gekoppelt ist, wobei der Kommunikationsknoten einen Medienzugriffsprioritätsmanager (486) umfasst, der für Folgendes ausgebildet ist:
in einer ersten Werbephase:
Identifizieren einer Prioritätsstufe eines nächsten Frames zur Übertragung an das gemeinsam genutzte Medium durch den Kommunikationsknoten;
Übertragen einer Angabe der Prioritätsstufe des nächsten Frames zur Übertragung auf das gemeinsam genutzte Medium;
Empfangen entweder von Informationen, die betreffen, ob der Kommunikationsknoten ein Gewinnerknoten ist, von einem Koordinator (530), oder Empfangen von Angaben über Prioritätsstufen anderer nächster Frames zur Übertragung auf das gemeinsam genutzte Medium von anderen Kommunikationsknoten, die mit dem gemeinsam genutzten Medium gekoppelt sind;
in Vorbereitung auf eine erste Datenphase, Bestimmen, ob der nächste Frame des Kommunikationsknotens ein an das gemeinsam genutzte Medium zu übertragender nächster Frame ist, basierend auf den empfangenen Informationen zum Gewinnerknoten oder den empfangenen Angaben zu den Prioritätsstufen der Vielzahl der nächsten Frames von den anderen Kommunikationsknoten, die mit dem gemeinsam genutzten Medium verbunden sind,
falls der nächste Frame der nächste Frame ist:
in einer ersten Datenphase, Übertragen des einen nächsten Frames zu dem gemeinsam genutzten Medium; und
Durchführen einer zweiten Werbephase unmittelbar nach der ersten Datenphase.

9. Kommunikationsknoten nach Anspruch 8, der ferner das Bestimmen von Zustandsinformationen umfasst, wobei Zustandsinformationen angeben, welcher der Vielzahl von Kommunikationsknoten einen vorherigen Frame zu dem gemeinsam genutzten Medium in einer vorherigen Datenphase übertragen hat.

10. Kommunikationsknoten nach Anspruch 9, wobei die Zustandsinformationen an dem Koordinator bestimmt werden.

11. Kommunikationsknoten nach Anspruch 9, wobei der Kommunikationsknoten die Zustandsinformationen bestimmt.

12. Kommunikationsknoten nach einem der Ansprüche 8 bis 11, wobei der Medienzugriffsprioritätsmanager dazu ausgelegt ist, eine Übertragung des einen nächsten Frames zu initiieren, falls die Prioritätsstufe des einen nächsten Frames höher ist als die Prioritätsstufen der anderen nächsten Frames, die von den anderen Kommunikationsknoten zu übertragen sind.

13. Kommunikationsknoten nach Anspruch 12, wobei, falls der nächste Frame und ein oder mehrere andere nächste Frames die höchste Prioritätsstufe aufweisen, Übertragen des nächsten Frames, falls der Kommunikationsknoten der nächste in einer vorbestimmten Sequenz ist.

14. Kommunikationsnetzwerk (100), das Folgendes umfasst:
ein gemeinsam genutztes Medium (102), wobei das gemeinsam genutzte Medium eine verdrillte Zweidrahtleitung ist;
eine Vielzahl von Kommunikationsknoten (104 - 1 , 104 - 2 , ... , 104 -N), die mit dem gemeinsam genutzten Medium gekoppelt sind, wobei jeder Kommunikationsknoten einen Medienzugriffsprioritätsmanager (486) umfasst, der für Folgendes ausgebildet ist:
in einer ersten Werbephase:
Identifizieren einer Prioritätsstufe eines nächsten Frames zur Übertragung an das gemeinsam genutzte Medium durch den Kommunikationsknoten;
Übertragen einer Angabe der Prioritätsstufe des nächsten Frames zur Übertragung auf das gemeinsam genutzte Medium;
Empfangen entweder von Informationen, die betreffen, ob der Kommunikationsknoten ein Gewinnerknoten ist, von einem Koordinator (530), oder Empfangen von Angaben über Prioritätsstufen anderer nächster Frames zur Übertragung auf das gemeinsam genutzte Medium von anderen Kommunikationsknoten, die mit dem gemeinsam genutzten Medium gekoppelt sind;
in Vorbereitung auf eine erste Datenphase, Bestimmen eines nächsten Frames, der an das gemeinsam genutzte Medium übertragen werden soll, basierend auf den empfangenen Gewinnerknoteninformationen oder den empfangenen Angaben von Prioritätsstufen der Vielzahl von nächsten Frames von den anderen Kommunikationsknoten, die mit dem gemeinsam genutzten Medium gekoppelt sind, falls der nächste Frame der eine nächste Frame ist, in einer ersten Datenphase, Übertragen des einen nächsten Frames an das gemeinsam genutzte Medium; und
Durchführen einer zweiten Werbephase unmittelbar nach der ersten Datenphase.

15. Kommunikationsnetzwerk nach Anspruch 14, wobei das Bestimmen des einen nächsten Frames das Auswählen des nächsten Frames mit einer höchsten Prioritätsstufe umfasst; oder
falls zwei oder mehr nächste Frames die höchste Prioritätsstufe aufweisen, Auswählen des einen nächsten Frames aus dem Kommunikationsknoten, der in einer vorbestimmten Reihenfolge der nächste ist.

## Revendications

1. Procédé d'exploitation d'une pluralité de nœuds de communication (104-1, 104-2, ... , 104-N) couplés à un support partagé (102), le procédé comprenant les étapes suivantes :
procéder à une première phase d'annonce (520) comprenant les étapes suivantes :
identifier, au niveau de chacun de la pluralité de nœuds de communication, un niveau de priorité d'une trame suivante destinée à être transmise au support partagé par ce nœud de communication ;
transmettre, par chacun de la pluralité de nœuds de communication, une indication du niveau de priorité de la trame suivante de ce nœud de communication pour transmission sur le support partagé ;
recevoir, au niveau d'un coordinateur (530) et/ou de chacun de la pluralité de nœuds de communication, les indications des niveaux de priorité des trames suivantes à transmettre au support partagé à partir de la pluralité de nœuds de communication couplés au support partagé ;
en préparation d'une première phase de données, déterminer une trame suivante de la pluralité de trames suivantes devant être une trame transmise suivante au support partagé sur la base des indications reçues de niveaux de priorité de la pluralité de trames suivantes ;
effectuer la première phase de données comprenant les étapes suivantes :
transmettre la prochaine trame déterminée vers les supports partagés ; et
effectuer une deuxième phase d'annonce directement après la première phase de données.

2. Procédé selon la revendication 1, comprenant en outre de déterminer des informations d'état, où les informations d'état indiquent lequel de la pluralité de nœuds de communication a transmis une trame précédente au support partagé dans une phase de données précédente.

3. Procédé selon la revendication 2, dans lequel les informations d'état sont déterminées par le coordinateur.

4. Procédé selon la revendication 2, dans lequel chaque nœud de communication détermine les informations d'état.

5. Procédé selon l'une quelconque des revendications précédentes, comprenant en outre d'indiquer le niveau de priorité de la trame suivante en transmettant l'indication dans une balise de priorité d'accès au support.

6. Procédé selon l'une quelconque des revendications précédentes, dans lequel la détermination de la trame des trames suivantes devant être la trame transmise suivante comprend de déterminer qu'un niveau de priorité de l'une des trames suivantes est supérieur aux niveaux de priorité des autres trames suivantes.

7. Procédé selon la revendication 6, dans lequel, si une ou plusieurs des trames suivantes indiquent le niveau de priorité le plus élevé, la détermination de la trame suivante à transmettre comprend de déterminer quel nœud de communication est le suivant dans une séquence prédéterminée.

8. Nœud de communication (104) couplé à un support partagé (102), le nœud de communication comprenant un gestionnaire de priorité d'accès au support (486) configuré pour :
dans une première phase d'annonce :
identifier un niveau de priorité d'une trame suivante pour transmission vers le support partagé par le nœud de communication ;
transmettre une indication du niveau de priorité de la trame suivante pour transmission sur le support partagé ;
recevoir soit des informations indiquant si le nœud de communication est un nœud gagnant, en provenance d'un coordinateur (530), soit recevoir des indications de niveaux de priorité d'autres trames suivantes pour transmission sur le support partagé en provenance d'autres nœuds de communication couplés au support partagé ;
en préparation d'une première phase de données, déterminer si la trame suivante du nœud de communication est une trame suivante à transmettre au support partagé sur la base des informations de nœud gagnant reçues ou des indications reçues de niveaux de priorité de la pluralité de trames suivantes provenant des autres nœuds de communication couplés au support partagé,
si la trame suivante est ladite trame suivante :
dans une première phase de données, transmettre ladite trame suivante vers le support partagé ; et
effectuer une deuxième phase d'annonce directement après la première phase de données.

9. Nœud de communication selon la revendication 8, comprenant en outre de déterminer des informations d'état, où les informations d'état indiquent lequel de la pluralité de nœuds de communication a transmis une trame précédente au support partagé dans une phase de données précédente.

10. Nœud de communication selon la revendication 9, dans lequel les informations d'état sont déterminées au niveau du coordinateur.

11. Nœud de communication selon la revendication 9, dans lequel le nœud de communication détermine les informations d'état.

12. Nœud de communication selon l'une quelconque des revendications 8 à 11, dans lequel le gestionnaire de priorité d'accès au support est configuré pour initier la transmission de ladite trame suivante si le niveau de priorité de ladite trame suivante est supérieur aux niveaux de priorité des autres trames suivantes à transmettre à partir des autres nœuds de communication.

13. Nœud de communication selon la revendication 12, dans lequel, si la trame suivante et une ou plusieurs autres trames suivantes ont le niveau de priorité le plus élevé, le procédé comprend de transmettre la trame suivante si le nœud de communication est le suivant dans une séquence prédéterminée.

14. Réseau de communication (100) comprenant :
un support partagé (102), le support partagé étant un fil à paire torsadée ;
une pluralité de nœuds de communication (104-1, 104-2, ... , 104-N) couplés aux supports partagés, chaque nœud de communication comprenant un gestionnaire de priorité d'accès au support (486) configuré pour :
dans une première phase d'annonce :
identifier un niveau de priorité d'une trame suivante pour transmission vers le support partagé par le nœud de communication ;
transmettre une indication du niveau de priorité de la trame suivante pour transmission sur le support partagé ;
recevoir soit des informations indiquant si le nœud de communication est un nœud gagnant, en provenance d'un coordinateur (530), soit recevoir des indications de niveaux de priorité d'autres trames suivantes pour transmission sur le support partagé en provenance d'autres nœuds de communication couplés au support partagé ;
en préparation d'une première phase de données, déterminer une trame suivante à transmettre au support partagé sur la base des informations de nœud gagnant reçues ou des indications reçues de niveaux de priorité de la pluralité de trames suivantes provenant des autres nœuds de communication couplés au support partagé, si la trame suivante est ladite trame suivante, dans une première phase de données, transmettre ladite trame suivante au support partagé ; et
effectuer une deuxième phase d'annonce directement après la première phase de données.

15. Réseau de communications selon la revendication 14, dans lequel la détermination de ladite trame suivante comprend de sélectionner la trame suivante avec le niveau de priorité le plus élevé ; ou
si deux ou plusieurs trames suivantes ont le niveau de priorité le plus élevé, sélectionner la trame suivante à partir du nœud de communication qui est le suivant dans une séquence prédéterminée.
